# EUROPÄISCHE PATENTANMELDUNG

(11) **EP 1 486 244 A1**
(43) Veröffentlichungstag der Anmeldung: **15.12.2004**
(21) Anmeldenummer: 04102528.9
(22) Anmeldetag: 04.06.2004
(51) Int. Cl.: B01D 46/52, B01D 39/18

(54) **Filterelement mit hydrophoben Eigenschaften**

(30) Priorität: 12.06.2003 DE 10326363
(71) Anmelder: Mann + Hummel GmbH, 71638 Ludwigsburg (DE)
(72) Erfinder: Bauer, Sascha, 71549 Auenwald (DE); Fasold, Michael, 71549 Auenwald (DE); Linhart, Jochen, 71332 Waiblingen (DE); Müller, Peter, 66113 Saarbrücken (DE); Spennemann, Dr. Alrun, 70499 Stuttgart (DE)

(57) **Zusammenfassung**

Die Erfindung betrifft ein Filterelement zur Abscheidung von Fest- und/oder Flüssigpartikeln aus fluiden Medien und weist hydrophobe Eigenschaften auf. Dabei ist es vorgesehen, das Filtermedium mit einer anorganischen nichtmetallischen, insbesondere silikatischen Beschichtung zu versehen, und dadurch eine Imprägnierung bzw. eine hydrophobe Oberfläche zu erzeugen.

## Beschreibung

### Stand der Technik

Die Erfindung betrifft ein Filterelement zur Abscheidung von festen und/oder flüssigen Partikeln aus fluiden Medien gemäß dem Oberbegriff des Patentanspruchs 1.

Außerdem betrifft die Erfindung ein Filtergehäuse zur Unterbringung des oben genannten Filterelements.

Derartige Filterelemente werden überall dort eingesetzt, wo eine Gefahr des Wassereintritts in das Filterelement droht und dadurch ein Aufweichen und infolgedessen eine statische Labilität des Filterelementes besteht. Aus dem Stand der Technik ist ein Filterelement bekannt, welches an der Abströmseite des Filtermediums eine mediendurchlässige Stützschicht aufweist. Im Falle eines Aufweichens wird das Filtermedium mit der Strömung gegen die Stützschicht gedrückt, dadurch kann eine Zerstörung des Filtermediums je nach Auftreten der Wassermenge verhindert oder verzögert werden. Nachteilig an dieser Lösung ist die zusätzlich erforderliche Stützschicht, dabei muss diese aus einem statisch widerstandsfähigen Material, meistens aus Metall gebildet werden. Dadurch entsteht ein Mehraufwand im Produktionsprozess an den Materialkosten sowie am Filtergewicht.

Eine weiterentwickelte Stabilisierung des Filtermediums wird in der JP 2003-210921 offenbart. Dabei handelt es sich um ein mehrlagiges Filtermedium wobei einzelne Lagen aus wasserabweisenden Fasern gebildet werden. Die Anordnung von mehreren Lagen erfordert bei der Herstellung einen höheren Material- und Prozessaufwand und verursacht höhere Kosten.

Die Aufgabe der Erfindung ist es, ein Filterelement zu schaffen, welches seine statische Stabilität auch beim Auftreten von Wasser in dem zu filternden Fluid beibehält. Dabei sollte das Filterelement einfach herstellbar sein, und es sollen keine Einschränkungen, hinsichtlich Strömungswiderstand, Gewicht und Handhabbarkeit auftreten.

Eine weitere Aufgabe ist darin zu sehen, dass das Filterelement eine Wassersperre für mitgeführtes Wasser innerhalb des zu filternden Fluid es darstellt. Diese Aufgabe wird durch die Merkmale der Patentansprüche 1 und 9 gelöst.

### Vorteile der Erfindung

Das erfindungsgemäße Filterelement zur Abscheidung von Fest- und/oder Flüssigkeitspartikeln aus fluiden Medien, insbesondere gasförmige Medien, vorzugsweise Ansaugluft einer Brennkraftmaschine weist als Filtermedium vorzugsweise Papier auf, welches mit einer anorganischen -nichtmetallischen insbesondere silikatischen Imprägnierung behandelt ist. Das Filterelement eignet sich ebenso zur Filtrierung beispielsweise von Ölen oder Kraftstoffen einer Brennkraftmaschine. Als weitere Filterm edienbeispiele sind synthetische oder teilsynthetische Filtermaterialien oder auch nachwachsende Rohstoffe wie Kokosfasern, Hanf oder Wolle sowie alle anderen im Stand der Technik bekannten Filtermedien zu nennen. Dabei wird vorzugsweise die vom zu filternden Fluid angeströmte Seite imprägniert. Diese Imprägnierung kann auf einem wässrigen System und/oder auf einer alkoholischen Basis basieren. Bevorzugt wird die Imprägnierung nach dem Sol-Gel-Verfahren mit einem modifizierten Siliziumoxid, vorzugsweise Si -O₂ durchgeführt. Beispielsweise eignet sich hierzu das Produkt Mincor welches von der Firma BASF angeboten wird. Dabei bildet sich auf der Oberfläche des Filtermediums eine dünnschichtige, geschlossene, aber dennoch partikelfluiddurchlässige, gleichmäßige Oberfläche die die Fasern des Mediums mit feinstskaligen Partikeln, bevorzugt Nanopartikeln umgibt. Das Filtermedium ist vorzugsweise von einer Dichtkontur umschlossen, welche wiederum mit einer Kontur eines Gehäuseteils korrespondiert und dadurch eine Anströmseite dichtend von einer Abströmseite trennt. Die umschließende Dichtkontur kann aus einem Elastomer wie zum Beispiel PU-Schaum, Moosgummi oder Silikonkautschuk bestehen, oder auch aus einem faserförmigen Stoff wie zum Beispiel Filz oder Papier gebildet sein, sowie sämtliche im Stand der Technik bekannten Dichtmaterialien.

Die Imprägnierung ermöglicht dem zu filternden Fluid eine vorteilhafte Durchströmung des Mediums, während die Wassermoleküle und/oder Partikel zurückgehalten werden. Das Wasser perlt an der anströmseitigen Oberfläche des Mediums tröpfchenförmig ab, kann sich nicht anlagern und das Medium nicht durchdringen oder aufweichen. Das zu filternde Fluid passiert das Filtermedium ohne wesentliche Änderung des Strömungswiderstandes. Diese wasserabweisende Eigenschaft erhöht in äußerst vorteilhafter Weise die Stabilität des Filterelementes. Da ein Filterelement bei der Durchströmung mit dem zu filtrierenden Fluid einer erhöhten Druckdifferenz ausgesetzt ist, wirkt sich eine Wasseraufnahme in das Filtermedium immer schwächend auf die Widerstandskraft des Filterelements gegenüber der Druckdifferenz aus. Dadurch, dass das erfindungsgemäß behandelte Filterelement im Wesentlichen keine Wasseraufnahme zulässt, bleibt die Integrität des Filterelementes erhalten. Die Imprägnierung kann bei jedem Standardfilterelement vorgenommen werden, so dass dieses eine kostengünstige Variante zur Vermeidung von Wasserbedingten Schäden am Filterelement und dem nachfolgend angeschlossenen Luftverbraucher darstellt. So können auch bestehende Filteranlagen einfach ohne Umkonstruierung einzelner Merkmale in vorteilhafter Weise nachgerüstet werden.

Ein weiterer Vorteil ergibt sich durch die erhöhte Temperaturbeständigkeit durch die Imprägnierung, was zur Erhöhung des Flammpunktes führt und eine Brandgefahr reduziert. Beim Einsatz des Filterelements in einer Luftfilteranlage für eine Brennkraftmaschine, kann es vorkommen, dass durch zum Beispiel weggeworfene Zigaretten eine Brandquelle direkt bis an die Anströmseite des Luftfilterelements angesaugt wird. Die mit den feinstskaligen Partikeln, bevorzugt Nanopartikeln umschlossene Fasern des Filtermediums, weisen jedoch gegenüber dem nicht behandelten Medium den Vorteil eines erhöhten Flammpunkts auf. Dies führt wiederum zu einer Kostenreduzierung da ansonsten bei gefährdeten Einsatzgebieten eine zusätzliche konstruktive Maßnahme erforderlich ist. Diese potenzielle Brandgefahr durch Einsaugen von zum Beispiel noch brennenden Zigaretten ist damit zu vermeiden.

Gegenüber aggressiven Umgebungsbedingungen, zum Beispiel durch das Rückströmen von unverbrannten HC-Gasen aus dem Ansaugtrakt einer Brennkraftmaschine beim Betriebsstillstand, oder durch die Einführung von Ölbehafteten Gasen, weist die Beschichtung eine hohe Beständigkeit auf. Ebenso ist eine bessere Beständigkeit gegenüber den zum Teil aggressiv wirkenden Additiven in neuen Leichtlaufölen bzw. verschiedenen Kraftstoffen gegeben. Durch die Imprägnierung bleibt die statische Stabilität dauerhaft gewährleistet, wodurch die Standzeit des Filtermediums verlängert wird.

In einer vorteilhaften Ausgestaltung der Erfindung weist das Filterelement ein zick-zack-förmig gefaltetes Filtermedium auf, wobei die Zickzack-Form einen hohlzylindrischen, ovalen oder eckigen Ring umschließt. Die Stirnseiten der zick-zack-Faltung sind in diesem dicht Fall verschlossen und an wenigstens einer Seite ist eine Endscheibe angeordnet, welche zur dichten Trennung zwischen einer anströmseitigen Rohseite und einer abströmseitigen Reinseite dient. Die Abströmseite ist dabei vorzugsweise an einem geodätisch höher liegenden Bereich angeordnet, wodurch das abgewiesene Wasser aufgrund seiner höheren Dichte in den geodätisch tiefer liegenden Bereich abfließen kann. Eine zweite Stirnseite des Filterelements kann durch eine geschlossene Endscheibe oder durch einen Stutzen des Filtergehäuses verschlossen werden. Das hohlzylindrische Filterelement kann auch an den Durchmesser eines Strömungsquerschnittes angepasst werden und als Inlinefilter integriert sein. Die zick-zack-förmige Faltung erlaubt es auf einem relativ kleinen Raum eine große Filterfläche anzuordnen und somit den Einbauraum des Filterelementes zu minimieren.

In einer weiteren vorteilhaften Gestaltungsvariante weist das Filterelement ein gewickeltes Filtermedium auf. Derartige Filterelemente bestehen entweder aus rillförmig plisierten, aufgerolltem Papieren, wobei das Papier parallel zur Rillachse aufgerollt wird, wobei derartige Elemente axial durchströmt werden, oder aus ringförmig aufgerollten Filtermedien, wobei sich durch das Aufrollen mehrere Schichten ergeben, welche radial durchströmt werden. Die in den Rillen der axial durchströmten Filterelementen entstehenden Strömungskanäle werden an den Stirnseiten wechselseitig verschlossen. An der Umfangsfläche des gewickelten Filterelements muss eine kommunizierende, dichtende Kontur zu einem Anschlussflansch eines Filtergehäuses gebildet sein. Durch die kompakte Bauform des gewickelten Filterelements ist es möglich auch in sehr kleinen Strömungsquerschnitten eine relativ große Filterfläche zu schaffen. Dieses wird dadurch ermöglicht, dass im Zentrum kein Abströmquerschnitt vorhanden sein muss und das Fluid axial durch das Filtermedium geführt wird. Die Bauform des gewickelten Filterelements, auch Kompaktfilter genannt, eignet sich besonders zur Integration in einen Rohrquerschnitt als Inlinefilter. Die zweite Möglichkeit zur Bildung eines Wickelelementes besteht darin, ein Filtermedium über einen Hohlraum spiralförmig aufzuwickeln. Das Filtermedium bildet in diesem Fall eine ringförmige mehrlagige Mantelfläche die vom zu filternden Fluid vorzugsweise von aussen nach innen radial durchströmt wird. Als Materialien für die Medien werden vorzugsweise synthetisch hergestellte Vliese verwendet, es sind jedoch auch alle aus dem Stand der Technik bekannten Filtermedien verwendbar. Die planförmigen Filtermedien können direkt aufgewickelt werden und benötigen keine aufwendige geometrische Struktur, deshalb ist diese Art des Wickelfilters durch einfache Prozesse kostengünstig herstell bar.

In einer weiteren vorteilhaften Anordnung ist das erfindungsgemäße Filterelement als ein Flachfilterelement ausgeführt. Dabei ist das Filtermedium in einer Ebene gefaltet, wobei die Seitenflanken des Papieres beispielsweise über eine Verklebung dicht verschlossen werden müssen. Die Faltenspitzen sind dabei einseitig der Anströmseite und gegenüberliegend der Abströmseite zugewandt. Die Faltung kann dabei zick-zack-förmig oder rund gestaltet sein. Bevorzug auf der Abströmseite ist das Filtermedium durch eine umlaufende Kontur dicht zu den Seitenflanken umschlossen, wobei die umlaufende Kontur zu einer Kontur eines Filtergehäuses korrespondiert. Das Flachfilterelement eignet sich überall dort zur vorteilhaften Verwendung, wo ein breiter aber flacher Einbauraum vorhanden ist. Gerade bei den Flachfilterelementen ist es schwierig eine ausreichende Stabilität zum Beispiel bei Druckpulsation zu gewährleisten. Wenn zusätzlich zur Druckpulsation oder zu einer großen Druckdifferenz auch noch ein Aufweichen des Filtermediums hinzukommt, ergibt sich sehr schnell ein Einreißen durch die große in der Strömung stehende Filterfläche. Die Imprägnierung der Anströmseite von Flachfilterelementen erweist sich hierbei als äußerst vorteilhafter und einfacher Weg die Stabilität des Filterelementes bei Auftreten von Wasserpartikeln im Fluid weiterhin zu gewährleisten.

Es ist vorteilhaft die Imprägnierung des Filtermediums, durch in der Beschichtungstechnik verbreitete Verfahren wie Sprühen, Walzen oder Tauchen aufzubringen. Das aus Feststoffen bestehende Filtermedium wird dabei von den in flüssiger Form vorhandenen Imprägnierungsmitteln partiell oder vollständig benetzt oder getränkt. Planförmige Medien sind dabei für alle Beschichtungsverfahren geeignet. Gefaltete oder plisierte Medien werden vorzugsweise im Tauchverfahren beschichtet, dabei ist in einem Verfahrensschritt eine beidseitige Beschichtung möglich. Da die meisten Filterelemente eine umschließende Kontur aufweisen, kann die Beschichtung auch nach der Anbringung dieser Kontur erfolgen, in diesem Fall empfiehlt sich ein Aufsprühen der Beschichtung.

In bevorzugter Weise wird die aufgebrachte Imprägnierung zur Beschleunigung der Aushärtung und Vernetzung mit einem Heizprozess oder UV-Strahlung behandelt. Die Aushärtezeit beträgt bei ca. 15°C mehrere Wochen und verkürzt sich unter einer Temperatur von ca. 150°C auf etwa 2 Minuten. Entsprechend der Taktzeit des Fertigungsverfahren kann die Aushärtungszeit durch die Temperaturwahl bestimmt werden. Da der Fertigungsprozess des Papiers nach dem Falzen oder Plissieren auch eine Aushärtungszeit beansprucht, können sich beide Aushärtungsprozesse bevorzugt überschneiden bzw. überdecken, somit kann die Beschichtung bereits vor Aushärtung des Papiers oder eines anderen Filtermediums aufgebracht werden. Dadurch verkürzt sich der Fertigungsprozess vorteilhaft und die Fertigungsanlage erhöht entsprechend ihre Produktivität. Eine längere Aushärtungszeit hat keinerlei negative Auswirkung auf die imprägnierenden Eigenschaften, weshalb auch eine Lagerzeit zum Aushärtungsprozess genutzt werden kann. Aufgrund der chemischen Beschaffenheit der Imprägnierung kann der Aushärtungsprozess mit der Zeit unterbrochen und weitergeführt werden, so dass es auch möglich ist die Filterelemente erst zwischenzulagern, so dass während der Zwischenlagerung eine gewisse eigenständige Aushärtung erfolgt und nach der Lagerung kurz vor Gebrauch die Filterelemente dann über eine entsprechende Temperatur oder UV-Behandlung so zu konditionieren, dass der Aushärteprozess abgeschlossen wird.

Weitere Vorteile ergeben sich in der Verwendung des Filterelements zur Filterung von gasförmigen Medien. Mögliche Einsatzbereiche sind zum Beispiel Innenraumfilter für Fahrzeugkabinen oder LKW's, Luftfilteranlagen im Ansaugtrakt von Verbrennungsmotoren, Luftfilteranlagen für die Luftansaugung von Kompressoren, insbesondere bei Luftentölelementen, Innenraumfilter für bewegliche Container, Lufttrocknungsanlagen insbesondere für die Lufttrocknung von Nutzfahrzeugen, Druckluftbremsen, Wasserabscheider in Vakuumpumpen oder zur allgemeinen Gasfiltration, überall dort wo ein Wassereintritt in ein Filterelement und/oder den anschließenden Verbraucher verhindert werden soll.

Aufgrund seiner Beständigkeit gegenüber aggressiven Substanzen lässt sich das erfindungsgemäße Filterelement in einem breiten Anwendungsspektrum einsetzen.

Vorteilhaft ist auch die Verwendung des erfindungsgemäßen Filterelementes zur Filtration von flüssigen Medien. Hier ist es möglich, Wasseranteile zum Beispiel aus Kraftstoffen, Schmierstoffen oder Betriebsstoffen zurückzuhalten. Eine typische Anwendung ergibt sich im Kraftstoffsystem von Brennkraftmaschinen, dabei droht das im Kraftstofftank oder im Fördersystem vorhandene Wasser vom Kraftstoffstrom mitgezogen zu werden. Durch eine Verwendung des erfindungsgemäßen Filterelementes in vorhandenen Kraftstofffiltern wird das Auftreten von Wasseranteilen in nachfolgenden Aggregaten vermieden. Besonders in sensiblen Filtersystemen ist es immens wichtig, Wasser von den sensiblen Teilen fern zu halten. Die durch Wasser entstehenden Korrosions und Dichtungsschäden können durch die erfindungsgemäß behandelten und imprägnierten Filterelemente erfolgreich vermieden werden.

In einer zweckmäßigen Ausgestaltung der Erfindung wird das erfindungsgemäße Filterelement als Filterelement zur Filtration von gasförmigen Medien verwendet und dichtend in ein Gehäuse eingebracht, welches ebenfalls mit der anorganischen, nichtmetallischen insbesonderen silikatischen Imprägnierung behandelt ist. Insbesondere empfiehlt sich diese Kombination für eine Luftfilteranlage, da das abgeschiedene Wasser rohluftseitig unmittelbar in die Umgebung abgeleitet werden kann. Das Filtergehäuse ist zum Beispiel durch ein Urformverfahren vorzugsweise im Spritzguss oder im Rotationsgussverfahren oder als Blasformteil hergestellt und wird aus einem Polymer gebildet. Beim Spritzgussverfahren kann die hydrophobe Imprägnierung der Gehäuseseite zum Beispiel durch Sprühen auf die Form des Werkzeuges aufgebracht werden und verbindet sich bei der Aushärtung des Polymers mit dem Gehäuse.

Die imprägnierende Beschichtung des Gehäuses kann auch beidseitig durch Tauchen oder Spritzen hergestellt werden. Dabei kann das Gehäuse ein- oder mehrteilig sein, wobei die Einzelnen Teile verschweißt, verklebt oder durch sonstige Verfahren zusammengefügt werden. Das Filtergehäuse weist an der Abströmseite und an der Anströmseite eine dem Filtermedium zugewandte innere Oberfläche auf. Zwischen An- und Abströmseite ist das Filterelement dichtend eingebracht. Wasser, welches in das Luftfiltersystem gelangt, kommt auch mit der inneren Oberfläche der Anströmseite in Berührung. Das vom Filtermedium zurückgewiesene Wasser wird über die Anströmseite abgeführt, dies kann bei verringerter Strömungsgeschwindigkeit des zu filternden Fluides oder beim Stillstand des Fluides erfolgen. Die Ausleitung des Wassers erfolgt bevorzugt durch eine an einem geodätischen Tiefpunkt angebrachte Öffnung, wobei das Fluid von unten nach oben strömt. Durch die hydrophobe Imprägnierung der inneren Anströmseite wird die Ausleitung beschleunigt, da das Wasser keine Oberfläche zur Haftung findet.

Weitere Einzelheiten der Erfindung werden in der Zeichnung anhand von Figuren erläutert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: eine schematische Ansicht eines erfindungsgemäßen Luftfilters im Schnitt,
- Figur 2: eine schematische Ansicht eines erfindungsgemäßen Luftfilterelementes,
- Figur 3: in vergrößerter Darstellung den Faserverlauf im Randbereich eines Filtermediums und
- Figur 4: den stark vergrößerten Faserverlauf in einem Ausschnitt der Randbereichs eines Filtermediums.

### Beschreibung der Ausführungsbeispiele

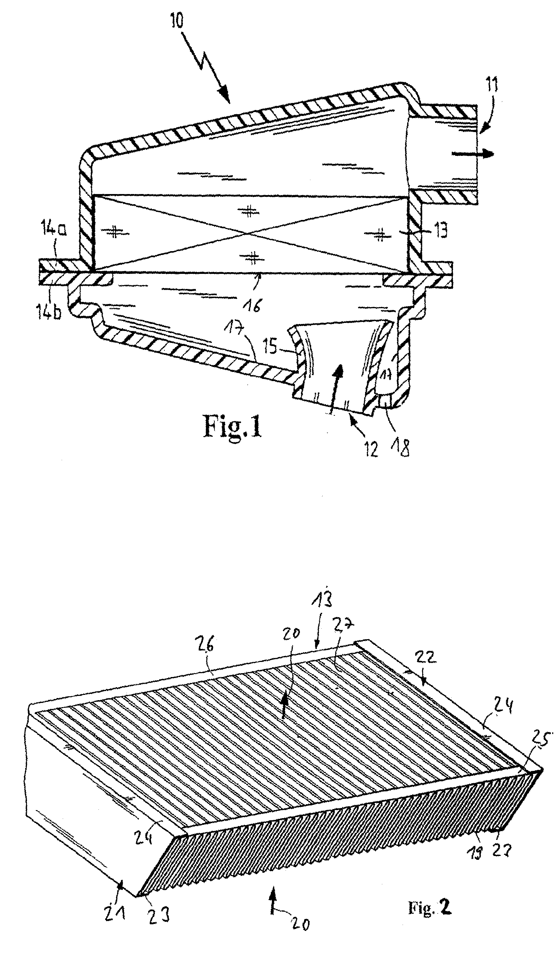

In Figur 1 zeigt einen Luftfilter 10 mit einem Auslass 11 und einem Einlass 12. Zwischen Auslass 11 und Einlass 12 ist dichtend ein Luftfilterelement 13 angeordnet. Der Luftfilter 10 besteht aus zwei Luftfiltergehäuseteilen 14a, 14b, welche dichtend lösbar miteinander verbunden sind. Der Auslass 11 und der Einlass 12, die Pfeile geben die Strömungsrichtung an, bieten jeweils die Möglichkeit, weitere Leitungen bzw. Bauteile am Luftfiltergehäuse anzuschließen. Die Gehäusewandungen am Luftfiltergehäuseteil 14b werden im Bereich des Einlasses 12 konvex in den Innenraum des Luftfilters 10 weitergeführt und bilden dadurch einen Aufnahmestutzen 15. Dieses bedeutet, dass sich die Durchgangsfläche ausgehend vom äußeren Ende des Einlasses 12 nach Innen in Richtung Innenraum des Luftfilters 10 vergrößert. Der Aufnahmestutzen 15 weist eine im Wesentlichen kreisringförmige Grundfläche auf. Dieser Luftfilter 10 ist in der hier dargestellten Konfiguration direkt in einer Brennkraftmaschine einsetzbar. Die Imprägnierung bzw. Behandlung des Luftfilterelementes 13 und/oder einer Gehäuseinnenwand erfolgte an der angeströmten Seite 16 des Filterelements 13 und an einer anströmseitigen Gehäuseinnenwand 17. Das Gehäuse 14b weist am geodätisch tiefsten Punkt eine Durchlassöffnung 18 für das vom Filterelement 13 abgewiesene Wasser auf. Das Wasser wird von der Anströmseite 16 des Filterelements 13 abgewiesen und läuft an der ebenfalls behandelten Gehäuseinnenwand 17 zum tiefsten Punkt des Filtergehäuseteils 14b wo es dann durch die Auslassöffnung 18 abfließen kann.

Die Figur 2 zeigt ein Flachfilterelement 13 für ein Luftfilter gemäß Figur 1. Der Figur 1 entsprechende Bauteile sind mit den gleichen Bezugszeichen versehen. Der Luftfilter 10 ist beispielsweise für die Luftfilterung im Ansaugtrakt eines Kraftfahrzeuges geeignet. Das Filterelement 13 weist beim Ausführungsbeispiel zick-zack-förmig gefaltete Papierfilterbahnen 19 auf, durch die die zu filtrierende Luft gemäß der Pfeile 20 hindurchtritt. Die Aussenkanten der Papierfilterbahn 19 sind vollständig und dichtend miteinander verklebt um einen Luftaustritt durch die Aussenkanten zu vermeiden. Hierzu wird beispielsweise vor der Faltung eine Leimraupe auf die Aussenkanten der Papierbahn 19 aufgetragen, welche dann nach der zick-zack-förmigen Faltung die Enden dichtend verschließt.

An gegenüberliegenden Seiten weist das Filterelement 13 Randelemente 21 und 22, ebenfalls aus Papier auf, die an den Enden 23 und 24 zu den Filterbahnen 19 herumgeklappt und mit diesen verklebt sind. An den anderen Kanten des Filterelements 13 sind Papierstreifen als Randelemente 25 und 26 auf die Oberfläche 27 des Filterelements 13 geklebt. Die herumgeklappten Enden 24 und die Randelemente 25 und 26 dienen hierbei auch als Dichtfläche bei der Einspannung des Filterelements 13 in ein Filtergehäuse. Die erfindungsgemäße Imprägnierung welche anströmseitig, also unterhalb des Filterelements 13 aufgebracht ist, wird bevorzugt vor dem Falten des Papiers aufgesprüht und kann dann nach dem Falten des Papiers in der darauf folgenden Ofenaushärtung mit ausgehärtet werden.

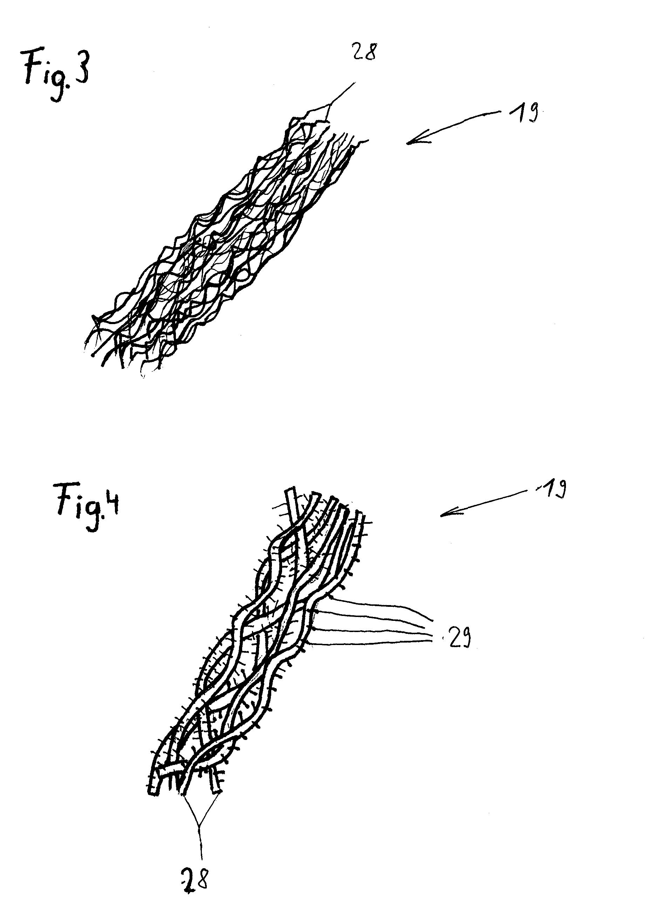

Die Figur 3 zeigt den Faserverlauf im Randbereich einer Filterbahn 19 in vergrößerter Darstellung. Den vorherigen Figuren entsprechenden Bauteile sind mit den gleichen Bezugszeichen versehen. In diesen vergrößerten Ausschnitts einer Filterbahn 19 ist zu erkennen, dass das Filterpapier nicht aus einer homogenen Masse sondern aus einzelnen miteinander verwobenen bevorzugt in Richtung der Filterbahn 19 ausgerichteten Fasern 28 besteht. Durch die Lage der verzwirbelten Fasern 28 zueinander, wird eine Festigung des Faserbündels bewirkt.

Die Figur 4 zeigt einen stark vergrößerten Ausschnitt des anströmseitigen Randbereichs 16 einer einzelnen Filterbahn 19. Den vorherigen Figuren entsprechenden Bauteile sind mit den gleichen Bezugszeichen versehen. Die im anströmseitigen Oberflächennahen Bereich der Filterbahn 19 vorhandenen Fasern 28 weisen durch die anorganische nicht metallische insbesondere silikatischen Imprägnierung an den einzelnen Fasern feinstskaligen Partikel, bevorzugt Nanopartikel 29. Diese feinstskaligen Partikel 29 härten durch Temperatur und/oder UV-Einwirkung aus und verbinden sich dauerhaft mit den Fasern 28. Durch die sehr geringe Größe der feinstskaligen Partikel 29 ist nun möglich, anströmendes Wasser im Molekülbereich zurückzuhalten, zu koalescieren und das Wasser so am Durchgang zu hindern, wohingegen das zu filternde Fluid (hier die Ansaugluft) ungehindert passieren kann. Wie zu erkennen ist, lagern sich die feinstskaligen Partikel 29 härchenförmig an die einzelnen Fasern 28 an. Zur kostengünstigen Ausfertigung der Filterelemente reicht es funktionsgemäß aus, nur die anströmseitigen Fasern 28 mit der Imprägnierung zu versehen. Es ist jedoch ebenfalls möglich, die gesamten Fasern jeder Papierbahn mittels des Beschichtungsmediums, vorzugsweise Sol oder Lack zu imprägnieren.

## Patentansprüche

1. Filterelement zur Abscheidung von Fest- u nd/oder Flüssigpartikeln aus fluiden M e-dien, aufweisend wenigstens ein Filtermedium mit hydrophoben Eigenschaften, **dadurch gekennzeichnet, dass** das Filtermedium eine durch anorganische nicht metallische, insbesondere silikatische Imprägnierung behandeltes Papier ist, welches nach der Behandlung wasserabweisende Eigenschaften aufweist.

2. Filterelement nach Anspruch 1, **dadurch gekennzeichnet, dass** das Filterelement ein hohlzylindrisches, zick-zack-förmig gefaltetes Filtermedium aufweist, welches stirnseitig dicht verschlossen ist.

3. Filterelement nach Anspruch 1, **dadurch gekennzeichnet, dass** das Filterelement ein hohlzylindrisches gewickeltes Filtermedium aufweist.

4. Filterelement nach Anspruch 1, **dadurch gekennzeichnet, dass** das Filterelement ein flaches Filtermedium aufweist.

5. Filterelement nach einem der vorherigen Ansprüche, **dadurch gekennzeichnet, dass** die Imprägnierung durch Sprühen, Walzen oder Tauchen aufgebracht ist.

6. Filterelement nach einem der vorhergehenden Ansprüche, **dadurch gekennzeichnet, dass** die Imprägnierung durch Temperaturbehandlung oder UV-Strahlung ausgehärtet bzw. vernetzt ist.

7. Filterelement nach einem der vorhergehenden Ansprüche, **dadurch gekennzeichnet, dass** das Filterelement ein Gasfilterelement, insbesondere ein Luftfilter ist.

8. Filterelement nach einem der vorhergehenden Ansprüche, **dadurch gekennzeichnet, dass** das Filterelement ein Flüssigkeitsfilterelement ist.

9. Filtergehäuse für ein Filterelement nach Anspruch 7, **dadurch gekennzeichnet, dass** das Filtergehäuse eine Gehäuseinnenseite aufweist, wobei zumindest ein Teil der Gehäuseinnenseite hydrophobe Eigenschaften aufweist, wobei das Filterelement zwischen einer Anströmseite und einer Abströmseite dichtend im Filtergehäuse angeordnet ist und die Imprägnierung des Filterelementes wenigstens teilweise anströmseitig angeordnet ist.
